# EUROPÄISCHE PATENTSCHRIFT

(11) **EP 0 840 865 B1**
(45) Veröffentlichungstag und Bekanntmachung des Hinweises auf die Patenterteilung: **10.11.1999**
(21) Anmeldenummer: 96927551.0
(22) Anmeldetag: 19.07.1996
(51) Int. Cl.: F16K 24/04, G01N 21/43

(54) **AUTOMATISCHES ENTLÜFTUNGSVENTIL FÜR HYDRAULIKANLAGEN**
AUTOMATIC AIR-VENT VALVE FOR HYDRAULIC SYSTEMS
SOUPAPE D'AERATION AUTOMATIQUE POUR INSTALLATION HYDRAULIQUE

(30) Priorität: 28.07.1995 DE 19527666
(43) Veröffentlichungstag der Anmeldung: 13.05.1998
(73) Patentinhaber: ASG Luftfahrttechnik und Sensorik GmbH, 69469 Weinheim (DE)
(72) Erfinder: STEIN, Joachim, D-69469 Weinheim (DE)
(74) Vertreter: Stoffregen, Hans-Herbert, Dr. Dipl.-Phys.
(86) Internationale Anmeldenummer: EP9603186
(87) Internationale Veröffentlichungsnummer: WO9705415

(56) Entgegenhaltungen:
- DE-A- 2 905 079
- DE-A- 2 912 977
- PATENT ABSTRACTS OF JAPAN vol. 007, no. 291 (M-265), 27.Dezember 1983 & JP,A,58 163877 (SANKYO DENKI KK), 28.September 1983,
- ATOMKERNENERGIE, Bd. 37, Nr. 2, 1981, MUNCHEN DE, Seiten 110-112, XP002016843 BAYOUMI, MOHAMED ET AL: "local voidage measurements in two-phase flow system using an optical probe"

## Beschreibung

Die Erfindung bezieht sich auf ein Entlüftungsventil für Hydraulikanlagen.

JP-A-58 163 877 zeigt ein Entlüftungsventil für Hydraulikanlagen, bei dem ein Signal zur Entlüftung dann ausgelöst wird, wenn durch Zunahme des von Luft eingenommenen Volumens, die Stromleitung zwischen beabstandeten Elektroden unterbrochen wird.

Ein weiteres Entlüftungsventil zum Ablassen von Gasen aus einem hydraulischen System ist bereits bekannt. Das Entlüftungsventil weist einen Ventilkörper mit zwei durch eine Bohrung untereinander verbundenen Ventilkammern auf, von denen eine einen mit dem Hohlraum des hydraulischen Systems verbundenen verengten Einlaß und einen der Bohrung zugeordneten Ventilsitz mit einer ersten Kugel als Ventilkörper aufweist. In der ersten Ventilkammer befindet sich ein Ventilkörper, der unter seinem Eigengewicht vom Ventilsitz weggedrückt wird und ein größeres Eigengewicht als die hydraulische Flüssigkeit hat. Die zweite Ventilkammer enthält einen der Bohrung zugeordneten Ventilsitz mit einer unter Federvorspannung stehenden zweiten Kugel als Ventilkörper und weist eine Öffnung zur Atmosphäre hin auf. Wenn der Druck des Systems einen vorbestimmten Wert überschreitet, wird die zweite Kugel gelüftet, so daß die Luft entweicht. (DE 29 12 977 A1)

Es ist weiterhin bekannt, Verschmutzungen in Hydraulikflüssigkeiten mittels eines optischen Sensors zu erfassen. (DE-Z.: fluid, November 1991, S. 24-26)

Schließlich ist es bekannt, zur Detektion von Gas eine Lichtquelle und einen Lichtempfänger zu verwenden. (DE 29 05 079 A1)

In hydraulischen Anlagen kann es durch Ausscheidung von in der Flüssigkeit gelösten Gasen oder durch Undichtigkeiten an manchen Stellen zur Ansammlung von Gasen kommen, die unter Umständen störend für die Betätigung oder Arbeitsweise der zu der Anlage gehörenden Geräte sind. Aus diesem Grund wird dafür gesorgt, daß sich nicht größere Luft- oder Gasvolumina an bestimmten Stellen bilden bzw. zu einer für den Betrieb der Anlage störenden Größe anwachsen können. An den Stellen, an denen sich solche Gase in der Anlage ansammeln, können Entlüftungsventile angebracht werden, die bei einem Gasvolumen, das eine gewisse Größe angenommen hat, einen Kanal zu einem Raum öffnen, in den das Gas entweichen kann. Zumeist öffnen die Entlüftungsventile zur Atmosphäre hin. Bei einem offenen Entlüftungsventil verdrängt die hydraulische Flüssigkeit das Gas. Dabei muß verhinden werden, daß die unter Druck stehende hydraulische Flüssigkeit durch das offene Entlüftungsventil entweicht.

Der Erfindung liegt das Problem zugrunde, ein Entlüftungsventil für Hydraulikanlagen zu entwickeln, das auf Gas unter Öffnen eines Auslaßkanals und auf Flüssigkeit unter Schließen des Auslaßkanals reagiert und nur in funktionsfähigem Zustand auf Gas durch Öffnen des Auslaßkanals anspricht.

Das Problem wird bei einem Entlüftungsventil für Hydraulikanlagen erfindungsgemäß dadurch gelöst, daß zwischen einem Lichtsender und einem lichtelektrischen Empfänger ein Lichtleiter aus einem optisch dichteren Material Gas angeordnet und mit mindestens einer äußeren Fläche in dem von Gas oder Flüssigkeit beaufschlagbaren Hohlraum derart angeordnet ist, daß bei Gas an der äußeren Fläche Licht zum Empfänger und bei Flüssigkeit an der äußeren Fläche kein Licht zum Empfänger gelangt und daß der Empfänger bei Empfang von Licht ein Ausgangssignal erzeugt, das ein in einen Auslaßkanal zwischen dem Hohlraum, in dem sich der Lichtleiter befindet und einem äußeren Raum angeordnetes Magnetventil in die Öffnungsstellung steuert. Das erfindungsgemäße Entlüftungsventil öffnet den Auslaßkanal, wenn alle Komponenten einwandfrei arbeiten. Ist ein Bauelement gestört oder ausgefallen, dann öffnet das Entlüftungsventil nicht. Es kann deshalb nicht aufgrund einer Störung oder eines Fehlers im Entlüftungsventil Flüssigkeit aus der hydraulischen Anlage oder dem hydraulischen Gerät nach außen dringen.

Bei einer bevorzugten Ausführungsform ist der Lichtleiter ein Prisma, in dessen Basis das Licht vom Lichtsender eingespeist wird und an dessen Basis der lichtelektrische Empfänger angrenzt, während die Dachfläche des Prismas dem Hohlraum mit der Flüssigkeit bzw. dem Gas zugewandt sind. Wenn Gas die Dachfläche des Prismas umgibt, gelangt Licht des Lichtsenders durch Totalreflexion im Prisma zum Empfänger, der daraufhin das Magnetventil in die Öffnungsstellung steuert. Befindet sich an den Dachflächen Flüssigkeit, dann tritt das Licht vom Prisma in die Flüssigkeit aus, so daß kein Licht zum Empfänger gelangt. Das Magnetventil ist im letzten Fall geschlossen. Fällt der Lichtsender oder Lichtempfänger oder eines der dem Lichtempfänger oder eines der dem Lichtempfänger nachgeschalteten Bauteile aus, dann erhält das Magnetventil auch dann kein Steuersignal zum Öffnen, wenn am Prisma Gas vorhanden ist.

Vorteilhafte Ausgestaltungen der Erfindung sind in den Unteransprüchen angegeben.

Ein automatisches Entlüftungsventil der vorstehend beschriebenen Art wird vorzugsweise an der Oberseite eines Hydraulik-Flüssigkeitsreservoirs angebracht, das Flüssigkeitsvorrat für eine hydraulische Anlage enthält.

Die Erfindung wird im folgenden anhand eines in einer Zeichnung dargestellten Ausführungsbeispiels näher beschrieben.

Es zeigen:

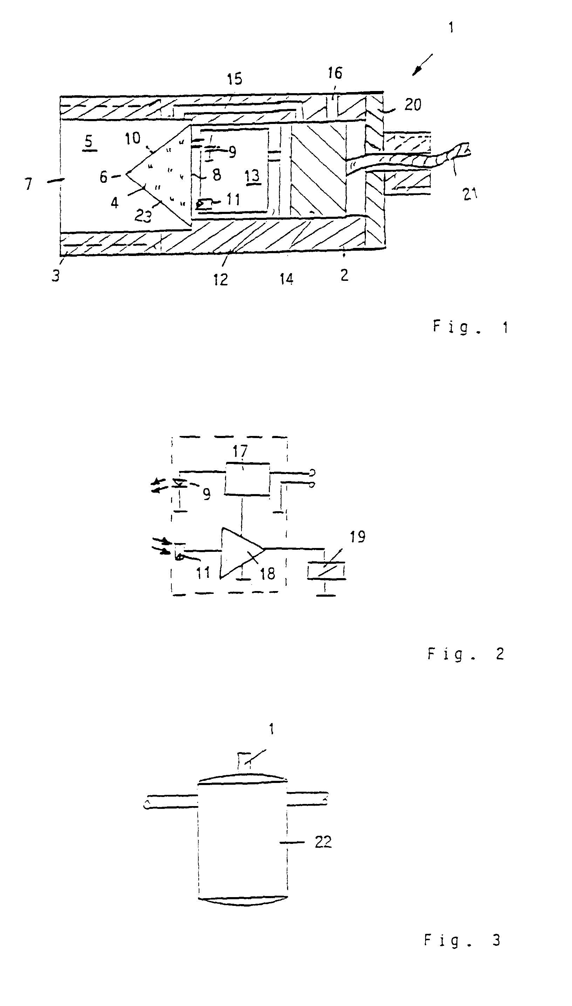

- Fig. 1: ein automatisch arbeitendes Entlüftungsventil schematisch, teilweise im Schnitt;
- Fig. 2: ein Schaltbild mit Einzelheiten einer im Entlüftungsventil gem Fig. 1 angeordneten Schaltung und
- Fig. 3: ein Behälter für eine hydraulische Anlage mit einem automatischen Entlüftungsventil in Seitenansicht.

Ein Entlüftungsventil 1 enthält ein zylindrisches Gehäuse 2, das an einem Ende mit einem Außengewinde 3 versehen ist. Im Inneren des Gehäuses 2 befindet sich als Lichtleiter ein Prisma 4 aus lichtdurchlässigem Material, z.B. Glas oder Kunststoff, d.h. einem Material, das optisch dichter als Gas ist. Das Prisma 4 ist am Ende eines quaderförmigen Hohlraums 5 angebracht und mit seiner Spitze 6 der Öffnung 7 des quaderförmigen Hohlraums 5 zugewandt. Die Basis 8 des Prismas 4 wird auf einer Seite vom Licht eines Lichtsenders 9 beaufschlagt, bei dem es sich um eine lichtemittierende Diode handeln kann, z.B. über eine Optik Licht in die Basis 8 in einen Bereich außerhalb der Mitte des Prismas 4 eingespeist, so daß das in das Prisma 4 eintretende Licht auf eine Dachfläche 10 des Prismas 4 auftritt. Die nicht näher dargestellte Optik, z.:B. eine vor der lichtemittierenden Diode angeordnete Linse bündelt das ausgesandte Licht.

In Bezug auf den Lichtsender 9 ist symmetrisch zur Mitte der Basis 8 ein lichtelektrischer Empfänger 11 angeordnet, bei dem es sich um eine lichtempfindliche Diode handeln kann. Lichtsender 9 und Empfänger 11 sind Teil einer in einem Hohlraum 12 im Gehäuse 2 angeordneten Schaltung 13. Im Hohlraum 12 neben der Schaltung 13 ist auch ein nur schematisch dargestelltes Magnetventil 14 angeordnet. Vom Hohlraum 5 führt ein Auslaßkanal 15 in der Wand des Gehäuses 2 zum Magnetventil 14. Weiterhin geht ein Auslaßkanal 16 vom Magnetventil 14 radial nach außen. Der Auslaßkanal 16 ist nach außen offen.

Die Schaltung 13 ist in Fig. 2 näher dargestellt. Sie enthält ein Netzteil 17, das den Lichtsender 9 gegebenenfalls mit einer geregelten Spannung versorgt. Dem Netzteil 17 kann eine Modulationseinrichtung nachgeschaltet sein, die die Speisespannung für den Lichtempfänger impulsmoduliert.

Dem Empfänger 11 ist ein Verstärker 18 nachgeschaltet, der für den Empfang von impulsmoduliertem Licht mit einem Filter verbunden sein kann. Die Betriebsspannung für den Verstärker 18 wird vom Netzteil 17 erzeugt. Der Ausgang des Verstärkers 18 ist an die Spule 19 des Magnetventils 14 angeschlossen. Über ein in die eine Stirnseite 20 des Gehäuses 2 eingeführtes Kabel 21 wird das Netzteil 17 mit Spannung versorgt.

Das Entlüftungsventil 1 wird an einer Stelle einer hydraulischen Anlage angeordnet. Insbesondere wird das Entlüftungsventil 1 auf der Oberseite eines Behälters 22 angeordnet, der ein Reservoir für eine hydraulische Flüssigkeit bildet. Wenn der Flüssigkeitskreislauf vollständig mit hydraulischer Flüssigkeit gefüllt ist, befinden sich die Dachflächen 10, 23 des Prismas 4 in der hydraulischen Flüssigkeit. Das auf die Dachfläche 10 auftreffende Lichbündel wird daher nur wenig gebrochen und verläßt das Prisma 4 zumindest an der Dachfläche 23, d. h. der Empfänger 11 wird nicht vom Licht beaufschlagt. Dies bedeutet, daß der Verstärker 18 kein Steuersignal an die Spule 19 abgibt, so daß das Magnetventil 14 geschlossen bleibt

Sammelt sich Luft im Hohlraum 5 an, die die Flüssigkeit an den Dachflächen 10, 23 verdrängt, dann wird das vom Lichtsender 9 ausgesandte Lichtbündel an den Dachflächen 10, 23 total reflektiert und gelangt zum Lichtempfänger 11, dessen Ausgangssignal über den Verstärker 18 die Spule 19 beaufschlagt. Hierdurch öffnet das Magnetventil 14, so daß die Luft im Hohlraum 5 durch den Kanal 15 über das geöffnete Magnetventil 4 und den Kanal 16 nach außen strömt. Die in den Raum 5 strömende Flüssigkeit verdrängt die Luft bei offenem Magnetventil und gelangt bis zu den Dachflächen 10, 23, die einen 90°-Winkel einschließen. Daher wird das Lichtbündel an den Dachflächen 10, 23 so gebrochen, da es nicht mehr zum Empfänger gelangt. Deshalb wird das Magnetventil 14 wieder geschlossen.

Das Magnetventil 1 öffnet nur, wenn die Bauteile in der Kette Netzteil 17, Lichtsender 9, Empfänger 11, Verstärker 8 und Spule 19 einwandfrei arbeiten. Fällt ein Bauelement aus, dann erhält die Spule 19 keine Spannung mehr. Dies gilt auch, wenn eine der Leitungen für die Stromversorgung der elektrischen Bauteile unterbrochen wird.

Auch eine Störung im optischen Strahlengang, z. B. durch Sprünge im Prisma oder Beeinträchtigungen der Justage der optischen Bauelemente verhindern das Auslösen des Magnetventils 14. Auf diese Weise wird gewährleistet, daß nicht durch Schäden oder Störungen ein Entlüftungsventil 1 Flüssigkeit nach außen, z. B. in die Atmosphäre, gelangt.

Im Kanal 16 ist insbesondere eine nicht dargestellte Düse angeordnet, die den Luftstrom beeinflußt. Bei sehr unwahrscheinlichem Hängenbleiben des Magnetventils in der Öffnungsstellung nach dem Abschalten des Ansteuersignals an der Spule 19 wird durch die Düse der Flüssigkeitsverlust auf ein Minimum reduziert. Es kann auch der Kanal 16 daraufhin z. B. lichtelektrisch überwacht werden, ob in ihm Luft oder Flüssigkeit vorhanden ist. Wird Flüssigkeit detektiert, kann ein Alarm erzeugt werden, so daß die Störungsquelle beseitigt werden kann.

## Patentansprüche

1. Entlüftungsventil für Hydraulikanlagen,
**dadurch gekennzeichnet,**
daß zwischen einem Lichtsender (9) und einem lichtelektrischen Empfänger (11) ein Lichtleiter aus einem optisch dichteren Material als Gas angeordnet und mit mindestens einer äußeren Fläche in dem von Gas oder Flüssigkeit beaufschlagbaren Hohlraum derart angeordnet ist, daß bei Gas an der äußeren Fläche Licht zum Empfänger (11) und bei Flüssigkeit an der äußeren Fläche kein Licht zum Empfänger gelangt, und daß der Empfänger beim Empfang von Licht ein Ausgangssignal erzeugt, das ein in einem Auslaßkanal (15, 16) zwischen dem Hohlraum (5), in dem sich der Lichtleiter befindet, und einem äußerem Raum angeordnetes Magnetventil (14) in die Öffnungsstellung steuert.

2. Entlüftungsventil nach Anspruch 1,
dadurch gekennzeichnet,
daß der Lichtleiter ein Prisma (4) ist, in dessen Basis (8) das Licht vom Lichtsender (9) eingespeist wird und an dessen Basis (8) der Empfänger (11) angrenzt, während Dachflächen (10, 23) des Prismas (4) dem Hohlraum (5) mit der Flüssigkeit bzw. dem Gas zugewandt sind.

3. Entlüftungsventil nach Anspruch 2,
dadurch gekennzeichnet,
daß die Dachfläche (10, 23) einen 90°-Winkel einschließen.

4. Entlüftungsventil nach einem der vorhergehenden Ansprüche,
dadurch gekennzeichnet,
daß vor dem ausgangsseitigen Ende des Auslaßkanals (16) eine Düse angeordnet ist.

5. Entlüftungsventil nach einem der vorgehenden Ansprüche,
dadurch gekennzeichnet,
daß es auf der Oberseite eines Reservoirs für eine hydraulische Flüssigkeit angeordnet ist.

## Claims

1. A vent valve for hydraulic devices, characterised in that a photoconductor made of a material which is optically denser than gas is arranged between a light transmitter (9) and an photoelectric receiver (11) and is arranged with at least one outer surface in the cavity acted upon by gas or fluid in such a manner that, when gas acts upon the outer surface, light reaches the receiver (11) and when fluid acts upon the outer surface no light reaches the receiver, and the receiver generates an output signal when it receives light, which actuates a magnetic valve (14) into the open position, said magnetic valve being arranged in an outlet duct (15, 16) between the cavity (5), in which the photoconductor is disposed, and an outer chamber.

2. A vent valve according to claim 1, characterised in that the photoconductor is a prism (4), into whose base (8) the light from the light transmitter (9) is fed and whose base (8) adjoins the receiver (11), whilst roof surfaces (10, 23) of the prism (4) face the cavity (5) with the fluid or the gas.

3. A vent valve according to claim 2, characterised in that the roof surfaces (10, 23) form an angle of 90°.

4. A vent valve according to one of the preceding claims, characterised in that a nozzle is arranged upstream of the outlet-side end of the outlet duct (16).

5. A vent valve according to one of the preceding claims, characterised in that it is arranged on the top of a reservoir for a hydraulic fluid.

## Revendications

1. Soupape de purge pour des installations hydrauliques,
caractérisée par
- un guide de lumière en une matière optiquement plus dense que le gaz, prévu entre un photoémetteur (9) et un récepteur photoélectrique (11), et avec au moins une surface extérieure dans la cavité recevant le gaz ou le liquide, de façon que lorsque du gaz est au contact de la surface extérieure, la lumière arrive dans le récepteur (11) et lorsqu'il y a du liquide sur la surface extérieure, aucune lumière n'arrive sur le récepteur et
- à la réception de lumière, le récepteur génère un signal qui ouvre une électrovanne placée dans un canal de sortie (15, 16), entre la cavité (5) dans laquelle se trouve le guide de lumière et un volume extérieur dans lequel se trouve l'électrovanne.

2. Soupape de purge selon la revendication 1,
caractérisée en ce que
le guide de lumière est un prisme (4) dont la base (8) reçoit la lumière d'un photoémetteur (9),
et le récepteur (11) est adjacent à la base (8) alors que les surfaces en forme de dièdre (10, 23) du prisme (4) sont tournées vers la cavité (5) avec le liquide ou le gaz.

3. Soupape de purge selon la revendication 2,
caractérisée en ce que
le dièdre (10, 23) forme un angle de 90°.

4. Soupape de purge selon l'une des revendications précédentes,
caractérisée par
une buse en amont de l'extrémité du canal de sortie (16) du côté de la sortie.

5. Soupape de purge selon l'une des revendications précédentes,
caractérisée en ce qu'
elle est prévue sur le côté supérieur d'un réservoir contenant un liquide hydraulique.
